# EUROPEAN PATENT APPLICATION

(11) **EP 4 436 012 A1**
(43) Date of publication of application: **25.09.2024**
(21) Application number: 22905684.1
(22) Date of filing: 03.03.2022
(51) Int. Cl.: H02K 3/28, H02K 3/50, H02K 3/46, B62M 6/40

(54) **STATOR ASSEMBLY, MOTOR, AND POWER-ASSISTED BICYCLE**

(30) Priority: 16.12.2021 CN 202111544682; 16.12.2021 CN 202123194439 U
(71) Applicant: Guangdong Welling Motor Manufacturing Co., Ltd., Foshan, Guangdong 528311 (CN)
(72) Inventor: ZUO, Yajun, Foshan, Guangdong 528311 (CN); WANG, Hongxiao, Foshan, Guangdong 528311 (CN); ZHOU, Qianyun, Foshan, Guangdong 528311 (CN); LIU, Hailiang, Foshan, Guangdong 528311 (CN)
(74) Representative: RGTH
(86) International application number: PCT/CN2022/079079
(87) International publication number: WO 2023/108913

(57) **Abstract**

A stator assembly, a motor and a power-assisted bicycle, where the stator assembly includes a stator component (200) and a busbar component (100), the stator component (200) is provided with a plurality of segmented stator cores (210) and segmented stator windings (220) that are wound around the segmented stator cores (210), each segmented stator winding (220) has two terminals (221), the busbar component (100) is installed on one end of the stator component (200) along the axial direction, and the busbar component (100) is provided with a plurality of layers of bus bars, which have a plurality of connecting portions, where the stator component (200) is also provided with bridge connecting members (230), which are connected to each of the terminal (221) of at least two segmented stator windings (220), and the connecting portions are connected to the remaining terminals (221) of the stator component (200) in one-to-one correspondence.

## Description

### CROSS-REFERENCE TO RELATED APPLICATIONS

The present application claims priorities to Chinese patent application No. 202111544682.9, filed on December 16, 2021, entitled "Stator Assembly, Motor, and Power-Assisted Bicycle" and Chinese patent application No. 202123194439.7, filed on December 16, 2021, entitled "Stator Assembly, Motor, and Power-Assisted Bicycle", the entire contents of which are incorporated herein by reference.

### TECHNICAL FIELD

The present disclosure relates to the technical field of motors, and in particular relates to a stator assembly, a motor, and a power-assisted bicycle.

### BACKGROUND

In related art, a stator assembly comprises a busbar subassembly and a stator. When the stator uses individual stator cores, the individual stator cores are wound separately and then assembled to form a stator. In such a case, the stator has many wiring terminals, resulting in the busbar subassembly needing to provide more bus bars to obtain a sufficient number of bus bar connecting terminals, which, however, will increase the difficulty of the injection molding process of the busbar subassembly and reduce the efficiency of the injection molding, thus increasing the process manufacturing cost of the busbar. In addition, since an insulating layer is arranged between the bus bars of adjacent levels, each additional bus bar will also add an insulating layer, making the axial size of the busbar subassembly relatively large, and further making the axial height of the stator assembly higher, which results in an increase in the axial size and volume of the motor and affects the compatibility and adaptability of the motor and the entire machine.

### SUMMARY

In view of this, a stator assembly is provided according to an embodiment of the present disclosure. The stator assembly can reduce the number of stacked bus bars. As a result, the axial height of the stator assembly is reduced, while the structure and manufacturing process of the busbar subassembly is simplified and the manufacturing is made easier.

According to an embodiment, a motor is provided. The motor comprises the stator assembly described above.

According to an embodiment, a power-assisted bicycle is provided. The bicycle comprises the motor described above.

According to an embodiment, the stator assembly comprises:
a stator, provided with a plurality of individual stator cores and a plurality of individual stator windings, wherein each of the plurality of individual stator windings wound around respectively one of the plurality of individual stator cores; where each of the plurality of individual stator windings has two wiring terminals; and
a busbar subassembly, installed at one end of the stator along an axial direction; where the busbar subassembly is provided with a plurality of stacked bus bars, and the stacked bus bar has a plurality of connecting portions;
where the stator is further provided with a bridge connecting member connected to one of the wiring terminals of each of at least two individual stator windings, and the connecting portion in each of the plurality of stacked bus bars is connected in one-to-one correspondence with the other wiring terminals of the stator.

The stator assembly according to an embodiment has at least the following beneficial effects:
Since the wiring terminals of some individual stator windings are connected by means of bridge connecting members, the number of connecting portions of the busbar subassembly for connecting the wiring terminals and thus the number of stacked bus bars of the busbar subassembly can be reduced. As such, the axial size of the busbar subassembly, and thus the axial height of the stator assembly are reduced. Moreover, due to the reduction in the number of stacked bus bars and the reduction in the number of connecting portions, the structure and manufacturing process of the busbar subassembly can be simplified, thereby the manufacturing of the busbar subassembly is made easier, which is beneficial to reducing the overall manufacturing cost of the stator assembly.

According to some embodiments of the present disclosure, the bridge connecting member is connected to one of the wiring terminals of each of two individual stator windings in adjacent slots that are related to a same phase.

According to some embodiments of the present disclosure, the bridge connecting member is provided with a bridge portion, welding portions connected to two ends of the bridge portion, wherein the welding portions are welded to the wiring terminals.

According to some embodiments of the present disclosure, the bridge portion and the welding portions are integrally formed.

According to some embodiments of the present disclosure, the cross-section of the wire of the individual stator winding is square or waist-circular.

According to some embodiments of the present disclosure, the busbar subassembly is further provided with a snap-in terminal, and the busbar subassembly is engaged with the stator by means of the snap-in terminal.

According to some embodiments of the present disclosure, the busbar subassembly further comprises an annular support bracket, and the bus bars comprise a first bus bar, a second bus bar, and a third bus bar;
the first bus bar is provided with a first body portion embedded into the annular support bracket, and the first body portion extends along a circumferential direction of the annular support bracket and defines a first opening;
the second bus bar is provided with a second body portion embedded into the annular support bracket, and the second body portion extends along the circumferential direction of the annular support bracket and defines a second opening;
the third bus bar is provided with a third body portion and a fourth body portion, wherein the third body portion (131) and the fourth body portion are embedded into the annular support bracket and are electrically connected, a gap is provided between the fourth body portion and the third body portion in an axial direction of the annular support bracket, and at a position where the fourth body portion and the third body portion meets;
where the first body portion and the second body portion are spaced apart along the axial direction of the annular support bracket, the first opening and the second opening are staggered along the circumferential direction of the annular support bracket, the third body portion is arranged within the first opening, and the fourth body portion is arranged within the second opening.

According to some embodiments of the present disclosure, the height of the gap along the axial direction of the annular support bracket is denoted as h, which satisfies: *h*≥0.3mm.

According to some embodiments of the present disclosure, the third bus bar is further provided with a bending portion, and the bending portion is respectively connected to the third body portion and the fourth body portion at two ends of the bending portion.

According to some embodiments of the present disclosure, the first bus bar, the second bus bar, and the third bus bar of the busbar assembly are over-molded and fixed by means of an injection molding process, and an insulating layer is formed between adjacent bus bars.

According to an embodiment, a motor is provided. The motor comprises the stator assembly as described above.

The motor according to an embodiment has at least the following beneficial effects:
Since this motor adopts the stator assembly as described above, the stator assembly connects the wiring terminals of some individual stator windings by means of the bridge connecting members. As a result, the number of connecting portions of the busbar subassembly for connecting the wiring terminals is reduced. The number of stacked bus bars of the busbar subassembly is reduced, which is beneficial to reducing the axial height of the stator assembly, reducing the axial size and volume of the motor, and improving the compatibility and adaptability of the motor and the entire machine.

According to some embodiments of the present disclosure, the number of poles of the motor is denoted as *2p*, the number of slots is denoted as Z, and the number of poles and the number of slots satisfy: |*Z-2p*|=2.

According to an embodiment, a power-assisted bicycle is provided. The bicycle comprises the motor as described above.

The power-assisted bicycle according to an embodiment of the third aspect of the present disclosure has at least the following beneficial effects:
The bicycle adopting the above motor is beneficial to reducing the footprint of the bicycle and improving the performance of the bicycle.

Additional aspects and advantages of the present disclosure will be set forth in part in the description that follows, and in part will be obvious from the description, or may be learned by practice of the present disclosure.

### BRIEF DESCRIPTION OF DRAWINGS

FIG. 1 is a schematic diagram of a stator assembly according to some embodiments of the present disclosure;
FIG. 2 is a schematic exploded view of the stator assembly of FIG. 1;
FIG. 3 is a schematic diagram of a stator according to some embodiments of the present disclosure;
FIG. 4 is a schematic diagram of a bridge connecting member according to some embodiments of the present disclosure;
FIG. 5 is a schematic t diagram of a busbar subassembly according to some embodiments of the present disclosure;
FIG. 6 is a schematic top view of the busbar subassembly of FIG. 5;
FIG. 7 is a schematic cross-sectional view along line A-A of FIG. 6;
FIG. 8 is an enlarged view of B in FIG. 7;
FIG. 9 is a schematic assembly diagram of bus bars according to some embodiments of the present disclosure; and
FIG. 10 is a schematic diagram of a third bus bar according to some embodiments of the present disclosure.

### Reference numerals:

Busbar subassembly 100;
   First bus bar 110;
      First body portion 111;
      First connecting portion 112;
      First opening 113;
   Second bus bar 120;
      Second body portion 121;
      Second connecting portion 122;
      Second opening 123;
   Third bus bar 130;
      Third body portion 131;
      Fourth body portion 132;
      Bending portion 133;
      Third connecting portion 134;
      Gap 135;
   Annular support bracket 140;
   Insulating layer 141;
   Three-phase connecting terminal 150;
Snap-In Terminal 160;
   Stator 200;
   Individual stator cores 210;
   Individual stator windings 220;
   Terminal 221;
   Bridge connecting member 230;
   Bridge portion 231;
   Welding Portion 232.

### DETAILED DESCRIPTION

Embodiments of the present disclosure will be described in detail below, and examples of the embodiments are shown in the accompanying drawings, where throughout the same or similar reference numerals denote the same or similar elements or elements having the same or similar functions. The following embodiments described with reference to the accompanying drawings are exemplary and serve only to explain the present disclosure, and should not be construed as limiting the present disclosure.

In the description of the present disclosure, it is to be understood that, referring to orientation description, the instructed orientation or positional relationships, for example, upper, lower, front, rear, left, right, etc., are based on the orientation or positional relationships shown in the accompanying drawings, merely for ease of description of the present disclosure and simplification for the description, rather than indicating or implying that the device or element referred to must have a specific orientation and be constructed and operated in a specific orientation, which, therefore, cannot be construed as limiting the present disclosure.

In the description of the present disclosure, term "several" refers to one or more, a plurality of refers to two or more, greater than, less than, over and the like are understood not to comprise this number, and above, below, within and the like are understood to comprise this number. If described, first and second are only for the purpose of distinguishing technical features, and not to be construed as indicating or implying relative importance or implicitly indicating the number of technical features indicated or implicitly indicating the precedence relationship of technical features indicated.

In the description of the present disclosure, unless explicitly defined otherwise, arranging, installing, connecting, assembling, matching and other words should be understood broadly, and a person skilled in the art can reasonably determine the specific meaning of the above words in the present disclosure combined with the specific content of the technical solution.

In the related art, a stator assembly comprises a busbar subassembly and a stator. When the stator uses individual stator cores, the individual stator cores are wound separately and then assemble to form a stator. In this case, the stator has many wiring terminals, resulting in the busbar subassembly needing to provide more bus bar layers to obtain a sufficient number of bus bar connecting terminals, which, however, will increase the difficulty of the injection molding process of the busbar subassembly and reduce the efficiency of the injection molding, thus increasing the process manufacturing cost of the busbar. In addition, since an insulating layer is provided between the bus bars of adjacent layers, each additional layer of bus bar will also add an insulating layer, making the axial size of the busbar subassembly relatively large, and further making the axial height of the stator assembly higher, which results in an increase in the axial size and volume of the motor and affects the compatibility and adaptability of the motor and the entire machine.

In order to at least alleviate at least one of the above technical problems, according to an embodiment of the present disclosure, a stator assembly is provided. The stator assembly can reduce the number of stacked bus bars and reduce the axial size of the busbar subassembly. As such, the axial height of the stator assembly is reduced, the structure and manufacturing process of the busbar subassembly is simplified and the manufacturing is made easier.

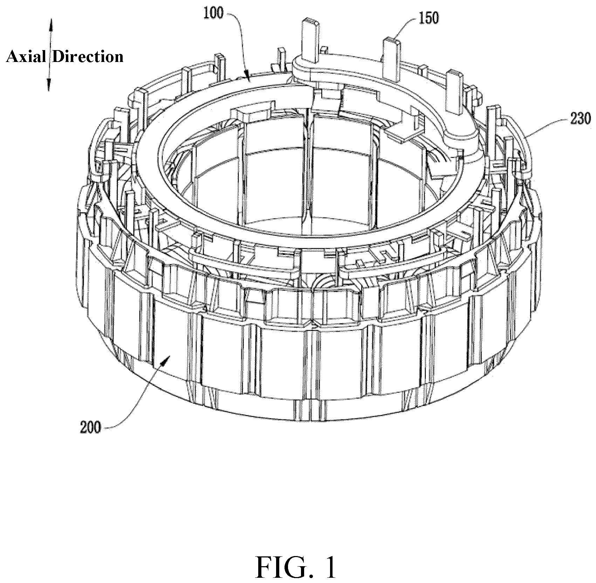

Referring to FIGS. 1 to 2, according to a first aspect of the present disclosure, a stator assembly is provided in an embodiment. The stator assembly comprises a stator 200, and a busbar subassembly 100. The busbar subassembly 100 is installed and connected to one end of the stator 200 along the axial direction.

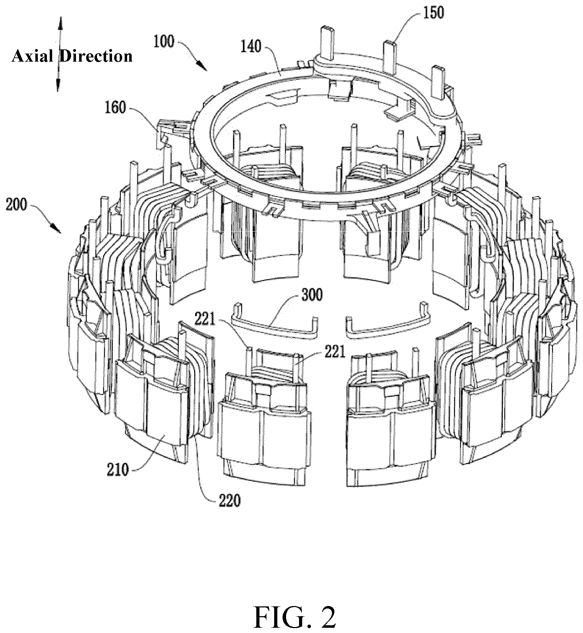

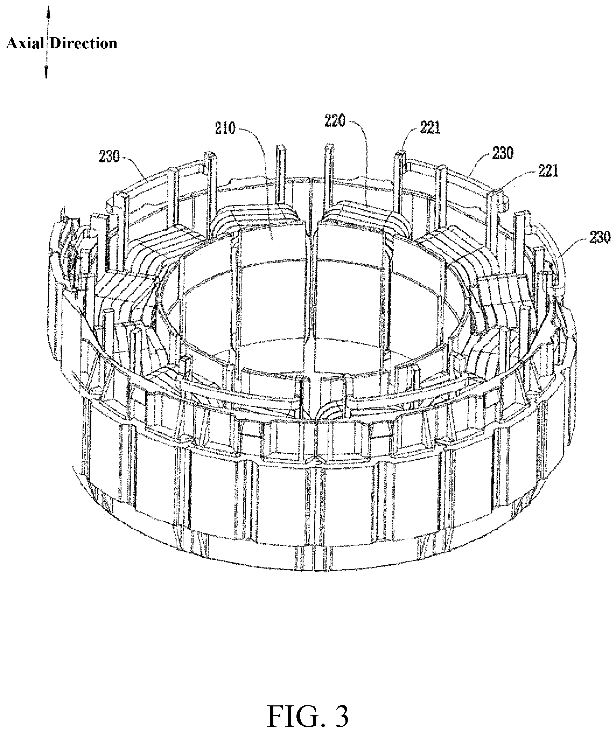

Referring to FIGS. 2 and 3, in some embodiments, the stator 200 is provided with a plurality of individual stator cores 210. The plurality of individual stator cores 210 are distributed in a ring. Each stator core 210 is wound with individual stator windings 220. Each stator winding 220 has two wiring terminals 221.

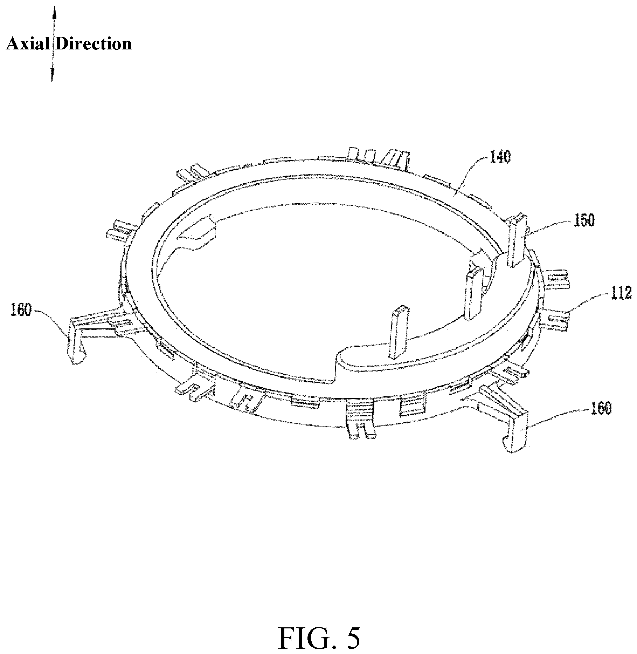

Referring to FIG. 5, the busbar subassembly 100 is provided with a plurality of stacked bus bars. Each bus bar has a plurality of connecting portions configured to connect the wiring terminals 221 of the respective stator windings 220. The connecting portion of the same bus bar is configured to connect the wiring terminals 221 of some stator windings 220 that are intended to be connected with each other, such that these wiring terminals 221 can be electrically connected to realize the busbar function.

Referring to FIGS. 1 to 3, in some embodiments, the stator assembly 200 also comprises bridge connecting member(s) 230. Each bridge connecting member 230 may be made of copper, aluminum, or other electrically conductive materials. Each bridge connecting member 230 is connected to one of the wiring terminals 221 of each of at least two individual stator windings 220 by means of welding or bonding. The connecting portions are connected to the remaining wiring terminals 221 of the stator 200 in a one-to-one correspondence manner. For example, each of the bridge connecting members 230 can connect one of the wiring terminals 221 of each of two individual stator windings 220 that are intended to be connected with each other, thereby reducing the number of the connecting portions and further reducing the number of the bus bars. Apparently, it can be understood that each of the bridge connecting members 230 can also connect the one of wiring terminals 221 of each of three or more individual stator windings 220 that are intended to be connected together. In an embodiment, the bridge connecting members 230 can be provided in the desired number, such that more wiring terminals 221 that are intended to be connected together can be connected, thereby reducing the number of connecting portions significantly.

Since the wiring terminals 221 of some individual stator windings 220 are connected by means of bridge connecting members 230, the number of connecting portions of the busbar subassembly 100 for connecting the wiring terminals 221 can be reduced. Hence, the number of stacked bus bars of the busbar subassembly 100 can be reduced. As a result, the axial size of the busbar subassembly 100 is reduced, and in turn the axial height of the stator assembly is reduced. Moreover, due to the reduction in the number of stacked bus bars and the reduction in the number of the connecting portions, the structure complexity of the busbar subassembly 100 is greatly simplified, the difficulty of the molding process of the busbar subassembly 100 is reduced, and the manufacturing efficiency of the busbar subassembly 100 is improved, which is beneficial to reducing the overall manufacturing cost of the stator assembly.

Referring to FIG. 3, it can be understood that in some embodiments of the present disclosure, the bridge connecting members 230 are connected to the wiring terminals 221 of two individual stator windings 220 in adjacent slots related to the same phase that are intended to be connected together, such that the length of the bridge connecting members 230 is not too long, which facilitates the connection between the bridge connecting members 230 and the wiring terminals 221, and reduces the impact of the bridge connecting members 230 on other parts at the same time. In addition, since one bridge connecting member 230 only connects two wiring terminals 221, the structure of the bridge connecting members 230 is relatively simple, which facilitates the processing and manufacturing of the bridge connecting members 230.

In an example where a 12-slot stator assembly is provided, the bridge connecting members 230 according to an embodiment of the present disclosure is employed to connect adjacent slots in the same phase of the three-phase winding. In that case, the number of stacked bus bars is reduced from 4 stacks to 3 stacks, and the number of connecting portions of the bus bars is reduced from 24 to 12. As such, the number of stacks of the bus bars and the number of the connecting portions of the busbar subassembly 100 are significantly reduced.

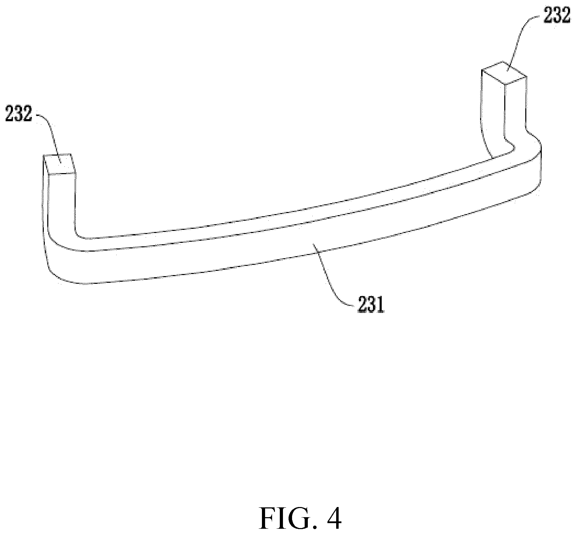

Referring to FIG. 4, it can be understood that in some embodiments of the present disclosure, each bridge connecting member 230 is provided with a bridge portion 231 and two welding portions 232. The bridge portion 231 is an elongate strip conductor with an arc shape to avoid other wiring terminals 221 that are not intended to be connected to the bridge connecting member 230. In an implementation, both ends of the elongated strip conductor are bent toward the wiring terminals 221 that are intended to be connected. The bridge portion 231 is provided a welding portion 232 at both ends of the bridge portion 231, respectively, such that the welding portions 232 can be easily welded and fixed to the wiring terminals 221.

It can be understood that the bridge portion 231 and the welding portions 232 can be integrated. In an example, the bridge portion 231 and the welding portions 232 can be integrally formed by a copper bar subjected to processing such as stamping and bending, for example, to have an increased connecting strength between the welding portions 232 and the bridge portion 231, and the processing is also more convenient. It should be noted that the bridge portion 231 and the welding portions 232 can also be made separately and then welded together.

It can be understood that in the related art, the stator windings is typically wounded with wires having round cross sections. During the winding, a large gap is formed between the wires having the round cross sections, resulting in a relatively low slot filling rate of the winding. When the stator 200 adopts a solid core and is wounded with wires having round cross sections for winding, the slot filling rate is usually only about 55%. In view of this, referring to FIGS. 2 and 3, in some embodiments of the present disclosure, on the basis of using individual stator cores 210, the individual stator windings 220 are wound with flat wires with rectangle, square, or waist circle cross sections, for example. As a result, the gap between the wires of the windings is reduced significantly and the slot-filling rate of the winding can be increased to about 77%. Hence, the power density and performance of the motor are enhanced without increasing the size of the motor.

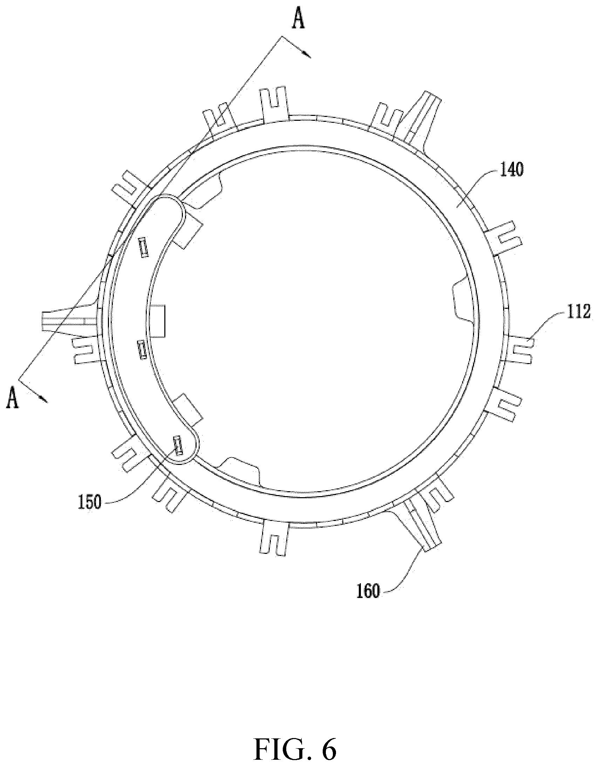

Referring to FIGS. 1, 5 and 6, in some embodiments, a busbar subassembly 100 is installed at one end of the stator 200 along the axial direction. In an implementation, the busbar subassembly 100 is provided with structures such as snap-in terminals 160. The stator 200 is provided with corresponding snaping pieces. As such, the busbar subassembly 100 can be snapped into the snaping pieces by means of the snap-in terminals 160 and installed at the end of the stator 200, which is more convenient to assemble and disassemble.

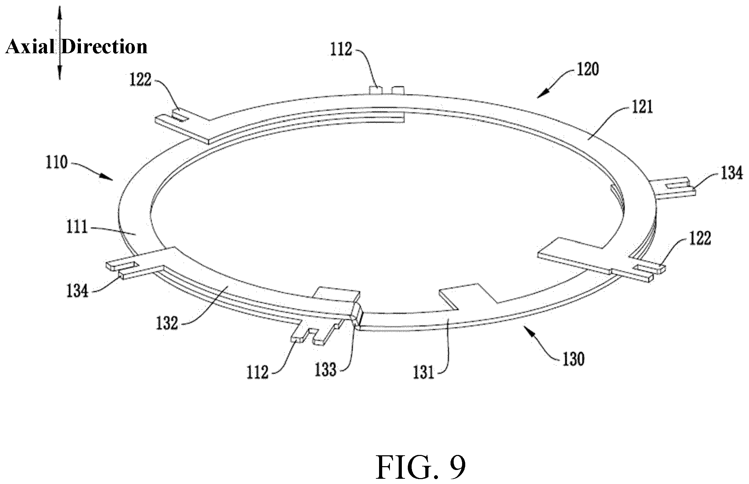

Referring to FIGS. 5 and 9, in some embodiments, the busbar subassembly 100 comprises an annular support bracket 140, a first bus bar 110, a second bus bar 120, and a third bus bar 130. It is apparent that, the busbar subassembly 100 may also comprise additional bus bars. The annular support bracket 140 is made of an insulating material, and can fix and support the first bus bar 110, the second bus bar 120, and the third bus bar 130 and isolate adjacent bus bars. The annular support bracket 140 is a over-molded piece. During the production of the annular support bracket 140, the first bus bar 110, the second bus bar 120, the third bus bar 130, and additional bus bars (if any) are over-molded and fixed by means of an injection molding process. An insulation layer is provided between adjacent bus bars. As a result, the overall structure of the busbar subassembly 100 is more stable, and adjacent bus bars have good insulation performance.

Each of the first bus bar 110, the second bus bar 120, and the third bus bar 130 is made of copper bars or other materials with good electrical conductivity and can function as a bus. It is apparent, the busbar subassembly 100 typically comprises an additional three-phase connecting terminal 150 that is installed on top of the annular support bracket 140. The three-phase connecting terminal 150 has three connecting terminals each connected at an end to a respective one of the three bus bars, and another end connected to a power supply for supply power to the three-phase windings.

Referring to FIG. 9, in an embodiment, the first bus bar 110 is a flat piece, which comprises a first body portion 111, and a first connecting portion 112. The first body portion 111 is internally embedded into the annular support bracket 140 and extends along the circumferential direction of the annular support bracket 140. As a result, the first body portion 111 generally has a half-ring shape, with a first opening 113 defined between both ends of the first body portion 111 along the circumferential direction. The first connecting portion 112 is connected to the outer peripheral wall of the first body portion 111 at each end of the first body portion 111. The first connecting portion 112 is configured to connect the wiring terminals 221 of a part of stator windings 220 of the stator 200 that are intended to be connected together, and to electrically connect those wiring terminals 221 by means of the first body portion 111, so as to realize the bus function.

Referring to FIG. 9, the second bus bar 120 may be identical or similar to the first bus bar 110. The second bus bar 120 comprises a second body portion 121, and a second connecting portion 122. The second body portion 121 is embedded into the annular support bracket 140 and extends along the circumferential direction of the annular support bracket 140. As a result, the second body portion 121 generally has a half-ring shape, with a second opening 123 defined between both ends of the second body portion 121 along the circumferential direction. The second connecting portion 122 is connected to the outer peripheral wall of the second body portion 121 at each end of the second connecting portion 122. The second connecting portion 122 is configured to connect the wiring terminals 221 of another part of the individual stator windings 220 of the stator 200 that are intended to be connected together, and to electrically connect those wiring terminals 221 by means of the second body portion 121, so as to realize the bus function.

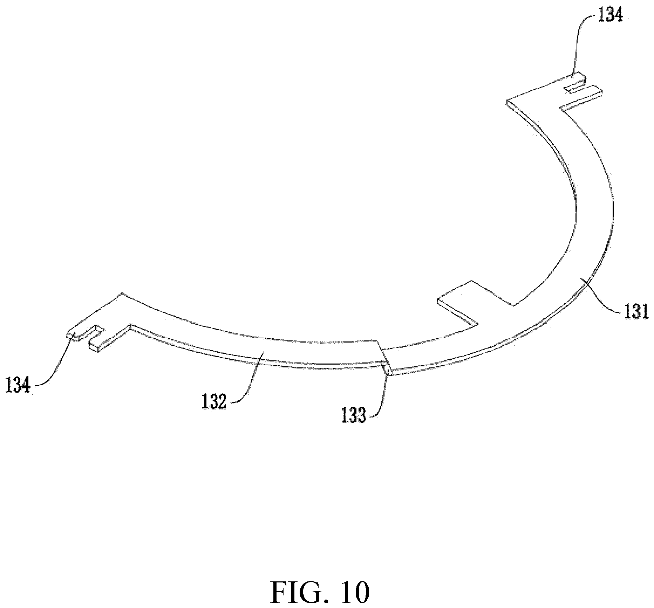

Referring to FIGS. 9 and 10, the third bus bar 130 comprises a third body portion 131, a fourth body portion 132, and a third connecting portion 134 that are electrically connected. The third body portion 131 and the fourth body portion 132 are arranged along the circumferential direction of the annular support bracket 140 and embedded into the annular support bracket 140. In particular, a gap is formed along the axial direction of the annular support bracket 140, at a position where the third body portion 131 meets the fourth body portion 132, such that the third bus bar 130 can be sandwiched between bus bars arranged at different levels. A plurality of third connecting portions 134 may be provided, a part of which are connected to the outer peripheral wall of the third body portion 131, and a part of which are connected to the outer peripheral wall of the fourth body portion 132. The third connecting portion 134 is configured to connect the wiring terminals 221 of yet another part of the individual stator windings 220 of the stator 200 that are intended to be connected together, and to electrically connect those wiring terminals 221 by means of the third body portion 131 and the fourth body portion 132, so as to realize the bus function.

Referring to FIG. 9, the first bus bar 110 and the second bus bar 120 are arranged at different levels along the axial direction of the annular support bracket 140., and are distributed along the axial direction of the annular support bracket 14, such that the first opening 113 and the second opening 123 are spaced apart along the circumferential direction of the annular support bracket 140. The third body portion 131 is arranged in the first opening 113, and the fourth body portion 132 is arranged in the second opening 123. That is, the third body portion 131 and the first body portion 111 are arranged at the same level, and the fourth body portion 132 and the second body portion 121 are arranged at the same level. By means of such an arrangement, the third bus bar 130 can make full use of the idle space of the first bus bar 110 and the second bus bar 120, thereby the total number of stacked bus bars is reduced. Since the bus bars on adjacent levels are isolated by the insulating layer 141 formed by the annular support bracket 140, a reduction in one stack of bus bar results in a reduction in the provision in one insulating layer 141 in the busbar subassembly 100. In this way, the axial height of the busbar subassembly 100, and thus the axial height of the stator assembly, can be reduced significantly.

It can be understood that, in some embodiments, the third bus bar 130 can also be provided with a plurality of fourth body portions 132 as needed. The plurality of fourth body portions 132 are successively arranged at different levels along the axial direction of the annular support bracket 140 and are distributed along the circumferential direction of the annular support bracket 140, such that each fourth body portion 132 can be arranged at the opening of the corresponding bus bar. With such an arrangement, the third bus bar 130 can be sandwiched between more bus bars at different levels, to make full use of the idle space of other bus bars, thereby the axial size of busbar subassembly 100 is further reduced.

In an embodiment, bus bars are intended to be used for bridge connections between same-phase windings of the three-phase windings. Flat bus bars, i.e., the first or second bus bar 110, 120 as described above, are typically used for the same-phase bridge connection of the relevant three-phase windings. In such a case, three stacks of copper bars are needed to realize the bridge connection. However, in case the bridge connection bus bar of a winding related to one of the phases therein is the third bus bar 130 described above, only two stacks of copper bars are required to realize the bridge connection between the windings related to the same phase of the three-phase winding, thereby the number of stacks of the copper bars is reduced. Each reduction in the thickness T1 of the copper bars will also lead to a reduction in the thickness T2 of the insulation layer. As a result, the axial height of the busbar subassembly 100 can be reduced by T, where T=T1+T2, In this way, the height of the stator assembly can be reduced effectively, to have a compact motor, the size of the motor is effectively reduced, and the adaptability of the motor is improved.

It should be noted that, in some embodiments, two or more first bus bars 110 and two or more second bus bars 120 may be provided. Additionally, or alternatively, two or more third bus bars 130 may be provided, such that the axial size of the busbar subassembly 100 can be further reduced.

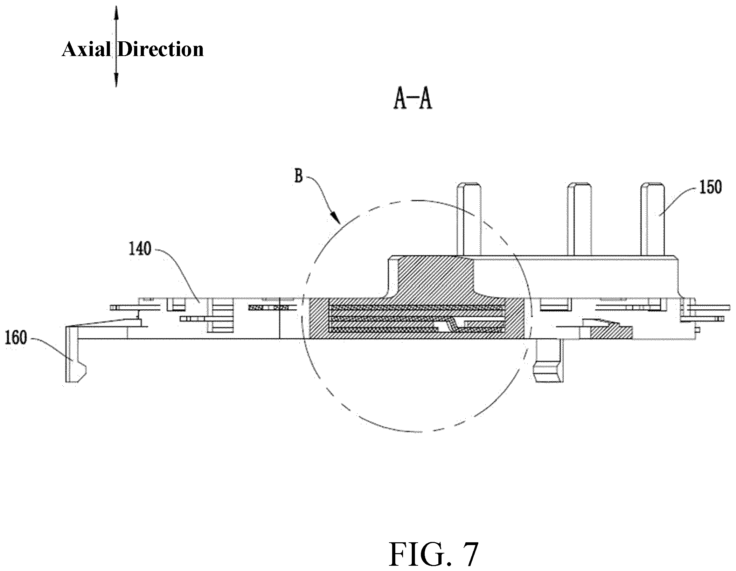

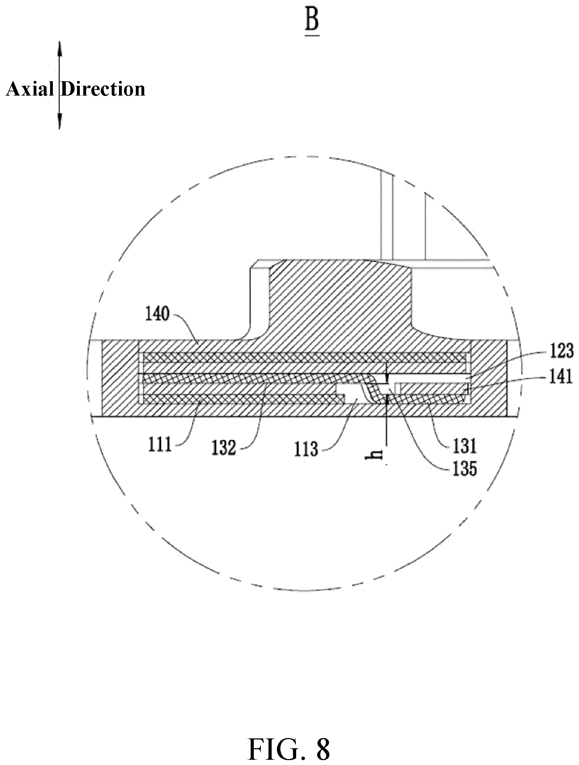

Referring to FIGS. 7 and 8, it should be noted that the adjacent bus bars are insulated and isolated by the insulating layer 141. Generally, insulating layers that have greater thickness are desired to achieve better insulation performance between the adjacent bus bars. To this end, in some embodiments of the present disclosure, the height of the gap 135 between the third body portion 131 and the fourth body portion 132 along the axial direction of the annular support bracket 140 is denoted by *h,* where *h≥*0.3mm to have a sufficient height of the gap 135. During the manufacture of the busbar subassembly 100, the insulating layer 141 is formed by injection of the insulating material into the gap 135, to allow the insulating layer 141 to have a sufficient thickness in such a case, such that better insulation performance can be achieved between the third bus bar 130 and adjacent bus bars, which is beneficial to improving the insulation withstand voltage performance of the busbar subassembly 100.

Referring to FIG. 10, it can be seen that the third bus bar 130 is also provided with a bending portion 133, which extends along the axial direction of the annular support bracket 140, or extends along the axial direction of the annular support bracket 140 with an angle not greater than 90°, such that the third bus bar 130 is in a Z shape. In this case, the bending portion 133 can extend from the bus bar at a lower level to the bus bar at a higher level, such that both ends of the bending portion 133 can be respectively connected to the third body portion 131 and the fourth body portion 132 that are at adjacent levels.

Referring to FIG. 10, it should be noted that the bending portion 133, the third body portion 131, and the fourth body portion 132 can be integrally formed. For example, when during the manufacturing of the third bus bar 130, the bending portion 133, the third body portion 131, and the fourth body portion 132 can be integrally formed by stamping a copper plate, such that the connecting strength among the bending portion 133, the third body portion 131, and the fourth body portion 132 is better, and the processing is more convenient as well. It is apparent that, the bending portion 133, the third body portion 131, and the fourth body portion 132 can also be made separately, and then be joined together by means of welding, etc.

It should be noted that the third bus bar 130 can also connect the fourth body portion 132 and the third body portion 131 through wires, thereby achieving an electrical connection between the fourth body portion 132 and the third body portion 131. For example, both ends of a copper wire are welded to the fourth body portion 132 and the third body portion 131, respectively, thereby electrically connecting the third body portion 131 and the fourth body portion 132 that are located at adjacent levels.

The stator assembly adopts the above busbar subassembly 100, in which the third body portion 131 of the third bus bar 130 is arranged at the first opening 113 of the first bus bar 110, and the fourth body portion 132 of the third bus bar 130 is arranged at the second opening 123 of the second bus bar 120. As a result, the idle space of the first bus bar 110 and the second bus bar 120 is effectively utilized, and the number of stacked bus bars is further reduced, and in turn the axial size of the busbar subassembly 100, and thus the axial height of the stator assembly are reduced.

According to a second aspect of the present disclosure, a motor is provided in an embodiment. The motor comprises the stator assembly as described in the first aspect of the present disclosure above.

Since this motor adopts the stator assembly as described in the first aspect of the present disclosure, the stator assembly connects the wiring terminals 221 of some individual stator windings 220 by means of the bridge connecting members 230. Thereby, the number of connecting portions of the busbar subassembly 100 for connecting the wiring terminals 221 is reduced, and the number of stacked bus bars of the busbar subassembly 100 is further reduced. As such, the axial size of the busbar subassembly 100, and thus the axial height of the stator assembly is reduced, which is beneficial to reducing the axial size and footprint of the motor to have a compact motor, thus the compatibility and adaptability of the motor and the entire machine are improved.

It should be noted that, in order to improve the efficiency of the motor, in some embodiments of the present disclosure, the number of poles of the motor is denoted as *2p,* the number of slots is denoted as *Z,* and the number of poles and the number of slots satisfy the following equation: |*Z-2p*|=2. When the number of poles and the number of slots of the motor satisfy the above equation, the value of the fundamental harmonic winding coefficient of the motor can is higher, and values of the low-order harmonic winding coefficients are lower. Therefore, the magnetic load of the motor is increased while the noise and harmonic losses generated by harmonic magnetic fields are reduced, and the efficiency of the motor is improved.

According to a third aspect of the present disclosure, a power-assisted bicycle is provided. The bicycle comprises the motor as described in the second aspect of the present disclosure above.

Due to the inclusion of the motor as described in the second aspect of the present disclosure, the power-assisted bicycle also has all the beneficial effects of the motor according to the embodiment of the second aspect of the present disclosure, which will not be described again here.

Several embodiments of the present disclosure have been described in detail above in conjunction with the accompanying drawings, but the present disclosure is not limited to the above embodiments, and various changes may be made within the scope of the knowledge possessed by a person of ordinary skill in the art to which it belongs without departing from the scope of the present disclosure.

## Claims

1. A stator assembly, comprising:
a stator, provided with a plurality of individual stator cores and a plurality of individual stator windings, wherein each of the plurality of individual stator windings wound respectively around one of the plurality of individual stator cores; wherein, each of the plurality of individual stator windings has two wiring terminals; and
a busbar subassembly, installed at an end of the stator along an axial direction; wherein the busbar subassembly is provided with a plurality of stacked bus bars, and the stacked bus bar has a plurality of connecting portions;
wherein the stator is further provided with a bridge connecting member connected to one of the wiring terminals of each of at least two individual stator windings, and the connecting portion is connected in one-to-one correspondence with the other wiring terminals of the stator.

2. The stator assembly according to claim 1, wherein the bridge connecting member is connected to one of the wiring terminals of each of two individual stator windings in adjacent slots that are related to a same phase.

3. The stator assembly according to claim 2, wherein the bridge connecting member is provided with a bridge portion and welding portions connected to two ends of the bridge portion, wherein the welding portions are welded to the wiring terminals.

4. The stator assembly according to claim 3, wherein the bridge portion and the two welding portions are integrally formed.

5. The stator assembly according to claim 1, wherein a cross-section of a wire of the individual stator winding is square or waist-circular.

6. The stator assembly according to claim 1, wherein the busbar subassembly is further provided with a snap-in terminal, and the busbar subassembly is engaged with the stator by means of the snap-in terminal.

7. The stator assembly according to any one of claims 1 to 6, wherein
the busbar subassembly is also provided with an annular support bracket, and the bus bars comprise a first bus bar, a second bus bar, and a third bus bar; wherein,
the first bus bar is provided with a first body portion embedded into the annular support bracket, and the first body portion extends along a circumferential direction of the annular support bracket and defines a first opening;
the second bus bar is provided with a second body portion embedded into the annular support bracket, and the second body portion extends along the circumferential direction of the annular support bracket and defines a second opening;
the third bus bar is provided with a third body portion and a fourth body portion, wherein the third body portion (131) and the fourth body portion are embedded into the annular support bracket and are electrically connected, a gap is provided between the fourth body portion and the third body portion in an axial direction of the annular support bracket;
wherein the first body portion and the second body portion are spaced apart along the axial direction of the annular support bracket, the first opening and the second opening are staggered along the circumferential direction of the annular support bracket, the third body portion is arranged within the first opening, and the fourth body portion is arranged within the second opening.

8. The stator assembly according to claim 7, wherein a height of the gap along the axial direction of the annular support bracket is denoted as h, wherein h satisfies: *h*≥0.3mm.

9. The stator assembly according to claim 7, wherein the third bus bar is further provided with a bending portion, and the bending portion is respectively connected to the third body portion and the fourth body portion at two ends of the bending portion.

10. The stator assembly according to claim 7, wherein the first bus bar, the second bus bar, and the third bus bar of the busbar assembly is over-molded and fixed by means of an injection molding process, and an insulating layer is formed between adjacent bus bars.

11. A motor, comprising a stator assembly according to any one of claims 1 to 10.

12. The motor according to claim 11, wherein a number of poles of the motor is denoted as *2p,* a number of slots is denoted *as Z,* and *Z* and *2p* satisfy: |*Z-2p*|=2.

13. A power-assisted bicycle, comprising a motor according to claim 11 or 12.
